# EUROPÄISCHE PATENTSCHRIFT

(11) **EP 2 678 627 B1**
(45) Veröffentlichungstag und Bekanntmachung des Hinweises auf die Patenterteilung: **08.04.2015**
(21) Anmeldenummer: 12705133.2
(22) Anmeldetag: 20.02.2012
(51) Int. Cl.: F28D 7/16, F28F 1/32, F28F 9/00

(54) **ABGASKÜHLER**
EXHAUST GAS COOLER
REFROIDISSEUR DE GAZ D'ÉCHAPPEMENT

(30) Priorität: 23.02.2011 DE 102011004606
(43) Veröffentlichungstag der Anmeldung: 01.01.2014
(73) Patentinhaber: Mahle International GmbH, 70376 Stuttgart (DE)
(72) Erfinder: GRÖZINGER, Steffen, 71665 Vaihingen (DE); PAARMANN, Martin, 70195 Stuttgart (DE); SCHRÖDER, Henning, 70469 Stuttgart (DE)
(74) Vertreter: BRP Renaud & Partner mbB Rechtsanwälte Patentanwälte Steuerberater
(86) Internationale Anmeldenummer: PCT/EP2012/052864
(87) Internationale Veröffentlichungsnummer: WO 2012/113753

(56) Entgegenhaltungen:
- EP-A1- 0 285 504
- DE-A1- 3 737 433
- DE-A1-102008 011 557
- FR-A1- 2 552 857
- JP-A- 2006 057 473

## Beschreibung

Die vorliegende Erfindung betrifft einen Abgaskühler mit einem Außengehäuse und einem darin angeordneten Wärmetauschereinsatz gemäß dem Oberbegriff des Anspruchs 1.

Aus der DE 10 2008 011 557 A1 ist ein gattungsgemäßer Abgaskühler mit einem Wärmetauschereinsatz und mit mehreren zwischen einem Zuströmbereich und einem Abströmbereich des Abgases eingegliederten Wärmetauscherpaketen bekannt. Diese Wärmetauscherpakete umfassen Kühlrohre mit Kühlrippen, wobei der Wärmetauschereinsatz von einem Innengehäuse umgeben ist, dessen Seitenwände mit Abstand zu den gelochten Seitenwänden des Wärmetauschereinsatzes angeordnet sind. Zwischen den geschlossenen Seitenwände des Wärmetauschereinsatzes und den angrenzenden Seitenwänden des Gehäuses sind schräg verlaufende Führungskanäle zur Überleitung des Kühlmittels von einem Kühlmittelzulauf über die einzelnen Wärmetauscherpakete zum Kühlmittelablauf vorgesehen. Durch den bekannten Abgaskühler soll insbesondere eine übermäßige Erhitzung des Gehäuses verhindert werden.

Aus der DE 10 2008 011 558 A1 ist ein Wärmetauscher in einem Gehäuse eines Wärmetauschereinsatzes mit mehreren zwischen einem Zuströmbereich und einem Abströmbereich eines Abgases eingegliederten Wärmetauscherpaketen bekannt. Diese umfassen Führungen mit Kühlrippen und weisen umfangsseitig der Kühlrohre aus den Ebenen der Kühlrippen muldenartige geprägte Turbulatoren auf. Hierdurch soll insbesondere ein besonders effektiver Wärmetausch ermöglicht werden.

Bei Abgaskühlern der bekannten Art kommt es oftmals zu extrem hohen Temperaturbelastungen, wodurch die Lebensdauer, insbesondere eines Außengehäuses eingeschränkt ist.

Die vorliegende Erfindung beschäftigt sich daher mit dem Problem, für einen Abgaskühler der gattungsgemäßen Art eine verbesserte oder zumindest eine alternative Ausführungsform anzugeben, die sich insbesondere individueller temperieren lässt.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein Außengehäuse eines Abgaskühlers nicht wie bisher ungekühlt zu lassen, sondern dieses aktiv durch einen separaten, zweiten Kühlkreislauf zu kühlen und dadurch dort auftretende Temperaturgradienten und verbunden damit dort auftretende Temperaturspannungen zu reduzieren. Der erfindungsgemäße Abgaskühler weist dabei ein Außengehäuse und einen darin angeordneten Wärmetauschereinsatz auf, der in einem Innengehäuse mit von Abgas quer angeströmte und von einem Kühlmittel eines ersten Kühlkreislaufs durchströmte Rohre besitzt. Erfindungswesentlich ist dabei, dass das Außengehäuse vom zweiten Kühlkreislauf gekühlt ist, der getrennt vom ersten Kühlkreislauf ist. Generell dient dabei der zweite Kühlkreislauf zu Kühlung des Außengehäuses und damit zur Reduzierung der dort auftretenden Temperaturspannungen. Mit dem erfindungsgemäßen Abgaskühler kann somit die Lebenserwartung deutlich gesteigert werden, da die von den Temperaturspannungen hervorgerufenen Materialbeanspruchungen deutlich geringer ausfallen. Trotzdem besitzt der erfindungsgemäße Abgaskühler eine hohe Leistungsdichte und eine kompakte Bauform, wodurch dieser in modernen Motorräumen, die üblicherweise oftmals recht beengt sind, eingebaut werden kann. Durch den separaten zweiten Kühlkreislauf zur Kühlung des Außengehäuses lässt sich auch die Temperatur des Abgaskühlers sowohl im Bereich des Wärmetauschereinsatzes als auch im Bereich des Außengehäuses besser und insbesondere flexibler handhaben. Dabei können das geschlossene Innengehäuse und das Außengehäuse zusammen Kanäle für den zweiten Kühlkreislauf bilden bzw. das Außengehäuse kann zumindest bereichsweise doppelwandig ausgebildet sein und dadurch derartige Kanäle für den zweiten Kühlkreislauf zur Verfügung stellen.

Bei einer vorteilhaften Weiterbildung der erfindungsgemäßen Lösung, sind der erste und der zweite Kühlkreislauf parallel zueinander geschaltet. Bei einer Parallelschaltung ist es insbesondere möglich, den ersten und den zweiten Kühlkreislauf als separate Kühlkreisläufe auszubilden und dadurch insbesondere auch unterschiedlich zu temperieren. Dabei kann der Kühlmittelstrom in einem Kühlmitteleinlass bereits aufgeteilt werden, wobei ein Teil durch die Rohre und der andere Teil am Außengehäuse entlang fließt. Denkbar ist aber auch, dass der Kühlmittelstrom am Kühlmitteleinlass aufgeteilt wird, wobei ein Teil durch eine bestimmte Anzahl von Rohren des Wärmetauschereinsatz und der andere Teil entlang des Außengehäuses und anschließend durch die restlichen Rohre fließt. Ebenso denkbar ist, dass der Kühlmittelstrom am Kühlmitteleinlass aufgeteilt wird und danach ein Teil durch eine bestimmte Anzahl von Rohren und der andere Teil durch die restliche Anzahl von Rohren und anschließend entlang des Außengehäuses fließt. Bereits diese Aufzählung lässt erahnen, wie mannigfaltig und damit flexibel die Strömungsrichtung der beiden Kühlkreisläufe im erfindungsgemäßen Abgaskühler festgelegt werden kann. Durch die zwei separaten Kühlkreisläufe lässt sich somit nicht nur das Außengehäuse anders temperieren als die Rohre des Wärmetauschereinsatzes, sondern es ist auch möglich unterschiedliche Bereiche des Wärmetauschereinsatzes unterschiedlich zu temperieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäßen Abgaskühler einmal mit montiertem Außengehäuse, einmal ohne montiertes Außengehäuse und einmal ohne montiertes Innengehäuse,
- Fig. 2: eine mögliche Strömungsführung eines ersten Kühlkreislaufs,
- Fig. 3: eine Darstellung ähnlich Fig. 2, doch mit dem Strömungsverlauf des zweiten Kreislaufs,
- Fig. 4: eine Querschnittsdarstellung durch den erfindungsgemäßen Abgaskühler,
- Fig. 5: eine Darstellung wie in Fig. 2, jedoch mit beiden Kühlkreisläufen,
- Fig. 6: eine Darstellung wie in Fig. 5, jedoch mit einer weiteren möglichen Strömungsführung des ersten und zweiten Kühlkreislaufs,
- Fig. 7: eine mögliche Strömungsführung des ersten Kühlkreislaufs,
- Fig. 8: eine mögliche Strömungsführung des zweiten Kühlkreislaufs.

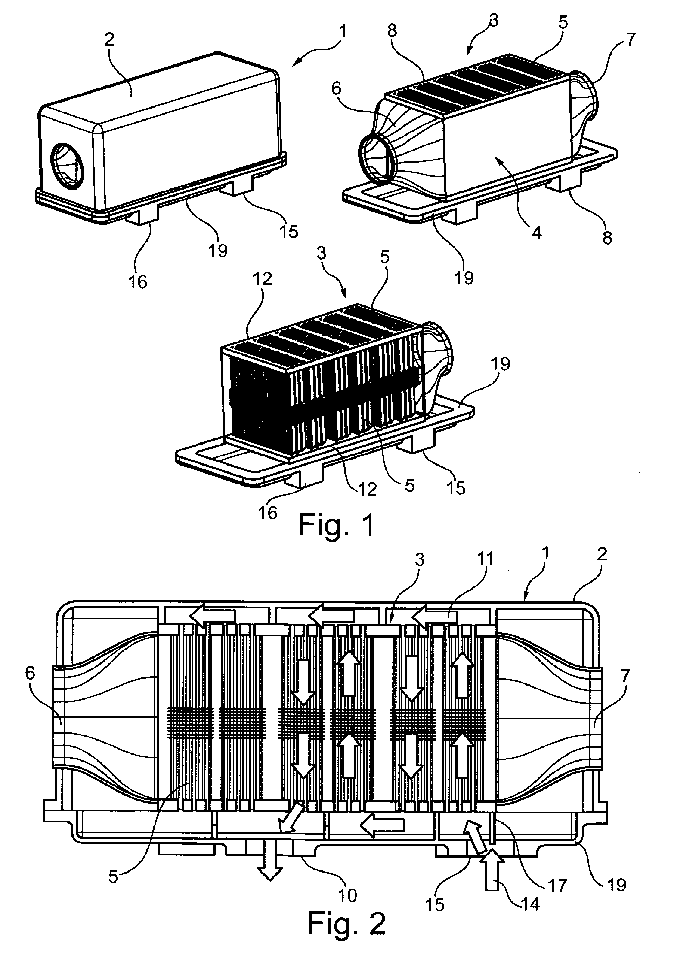

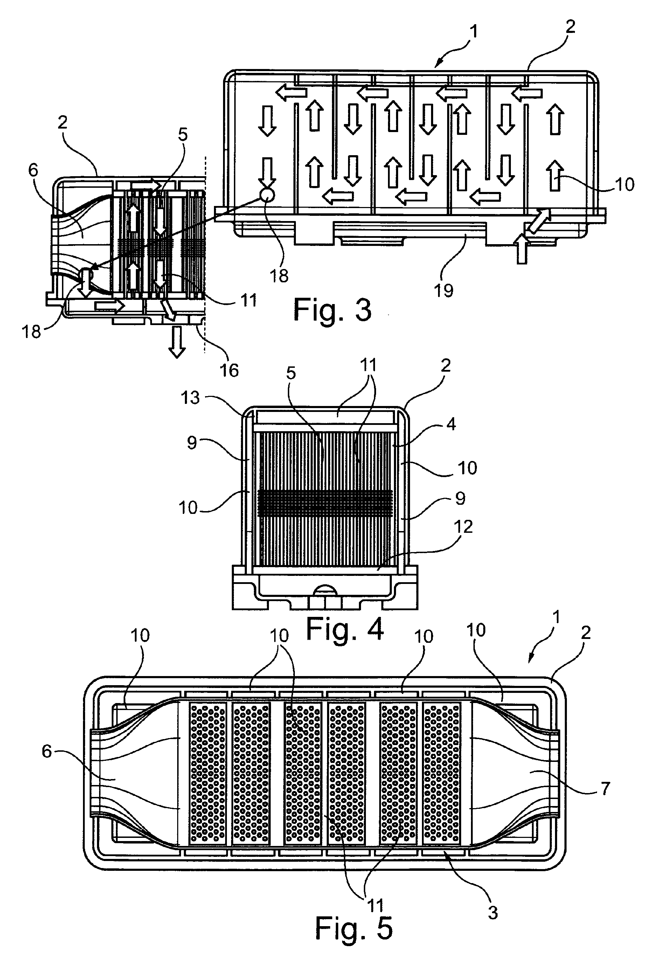

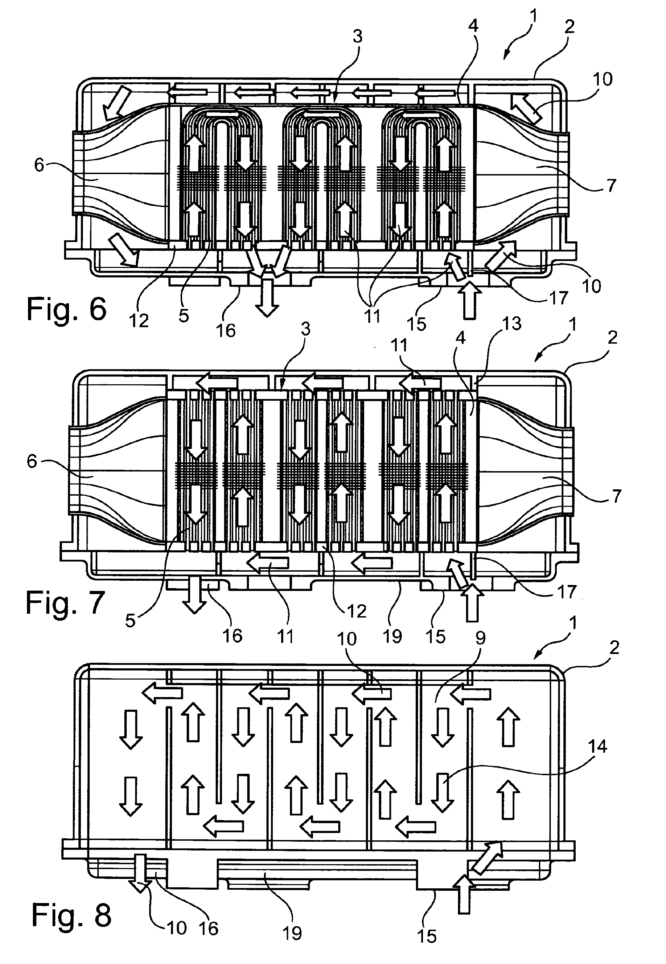

Entsprechend den Fig. 1 bis 8, weist ein erfindungsgemäßer Abgaskühler 1 ein Außengehäuse 2 mit einem darin angeordneten Wärmetauschereinsatz 3 auf. Der Wärmetauschereinsatz 3 besitzt in einem Innengehäuse 4 mit Abgas quer angeströmte und von einem Kühlmittel eines ersten Kühlkreislaufs 11 durchströmte Rohre 5. Das Innengehäuse 4 besitzt dabei üblicherweise einen Einlass- und einen Auslassdiffussor 6, 7 sowie zwei Seitenwände 8. Um eine Temperaturbelastung insbesondere für das Außengehäuse 2 reduzieren und zugleich eine flexible und individuelle Kühlung realisieren zu können, schlägt die erfindungsgemäße Lösung vor, dass zumindest Bereiche des Außengehäuses 2, insbesondere Seitenwände 8, von einem zweiten Kühlkreislauf 10 gekühlt sind, der getrennt vom ersten Kühlkreislauf 11 ist. Dabei können das Innengehäuse 4 und das Außengehäuse 2 zusammen Kanäle 9 für den zweiten Kühlkreislauf 10 bilden oder das Außengehäuse 2 ist zumindest bereichsweise doppelwandig ausgebildet (vgl. Fig. 4) und bildet dadurch Kanäle 9 für den zweiten Kühlkreislauf 10. Der Abgaskühler 1 ist in Längsrichtung von Abgas durchströmt. Die Rohre 5 selbst sind über zwei Rohrböden 12 jeweils längsendseitig gefasst. Denkbar ist selbstverständlich auch, dass die Rohre 5 nicht gerade, sondern U-förmig ausgebildet sind, wie dies beispielsweise in der Fig. 6 dargestellt ist, so dass in diesem Falle lediglich ein einziger Rohrboden 12 zur Fassung der Rohre 5 erforderlich ist. Durch die aktive Kühlung es Außengehäuses 2 werden darin auftretende Temperaturgradienten reduziert und damit auch die Temperaturbelastung für das Außengehäuse 2 verringert. Durch die separate Ausführung der beiden Kühlkreisläufe 11,10 lassen sich individuelle Temperierungsmöglichkeiten schaffen, die mit herkömmlichen Abgaskühlern nicht darzustellen waren.

Außen am Innengehäuse 4 und/oder innen am Außengehäuse 2 können dabei Stege/Rippen 13 angeordnet sein, die jeweils eine Kanalwand der Kanäle 9 für den zweiten Kühlkreislauf 10 bilden. Generell können dabei der erste Kühlkreislauf 11 und der zweite Kühlkreis 12 parallel zueinander geschaltet sein, wie dies beispielsweise gemäß der Fig. 6 dargestellt ist.

Betrachtet man die Fig. 2, so kann man erkennen, dass ein Kühlmittelstrom 14 beginnend vom Kühlmitteleinlass 15 zunächst über einen Teil der Rohre 5 mäanderförmig bis zum Kühlmittelauslass 16 strömt. Dabei ist im Bereich des Kühlmitteleinlasses 15 ein Teiler 17 angeordnet, der den Kühlmittelstrom 14 in den ersten und zweiten Kühlkreislauf 11, 10 aufteilt. Gemäß der Fig. 2 ist dabei der erste Kühlkreislauf 11 dargestellt, wogegen gemäß der Fig. 3 der zweite Kühlkreislauf 10 dargestellt ist, der zunächst das Außengehäuse 2 kühlt und anschließend durch einen Teil der Rohre 5 bis zum Kühlmittelauslass strömt. Die Fig. 2 und 3 gehören somit zusammen, wobei der durch den Teiler 17 zunächst in den zweiten Kühlkreislauf 10 umgelenkte Kühlmittelstrom 14 zunächst die Kanäle 9 des zweiten Kühlkreislaufs 10 durchströmt und erst anschließend durch eine entsprechende Öffnung 18 im Bereich des Einlassdiffussors 6 und anschließend durch einen Deckel 19 durch die Rohre 5 zum Kühlmittelauslass 16 geleitet wird.

Betrachtet man die Fig. 5, so kann man erkennen, dass zwei Wärmetauscherpakete vom ersten Kühlkreislauf 11 und das Außengehäuse 2 und das dritte Wärmetauscherpaket vom zweiten Kühlkreislauf 10 durchströmt sind.

In Fig. 6 ist eine Umlenkung des Kühlmittelstroms 14 im Bereich des ersten Kühlkreislaufes 11 mittels U-förmig geformter Rohre 5 bewirkt. Hierbei verlaufen der erste und der zweite Kühlmittelstrom 10, 11 parallel zueinander. Gemäß der Fig. 7 ist ein weiterer Strömungspfad des ersten Kühlkreislaufs 11 gezeigt, wobei in Fig. 8 der Strömungspfad des zweiten Kühlkreislaufs 10 gezeigt ist, der zur Kühlung des Außengehäuses 2 dient.

Durch die erfindungsgemäße aktive Kühlung des Außengehäuses 2 lassen sich insbesondere die Temperaturgradienten und damit auch die Temperaturbelastungen am Außengehäuse 2 reduzieren, wodurch die thermische Belastung insgesamt gesenkt und damit die Lebensdauer erhöht werden kann. Die Kühlung des Außengehäuses 2 kann dabei entweder durch Kanäle 9 erfolgen, die, beispielsweise mittels Rippen/Stege 13, sowohl vom Innengehäuse 4 als auch vom Außengehäuse 2 zusammengebildet sind und/oder durch eine doppelwandige Ausbildung des Außengehäuses 2, wie dies beispielsweise gemäß der Fig. 4 dargestellt ist.

Durch die separat zu einander ausgebildeten Kühlkreisläufe 11,10 lässt sich eine individuelle Kühlung erzielen, die besonders flexibel ist, sofern die beiden Kühlkreisläufe 11,10 gänzlich separat zueinander ausgebildet sind und nicht nur durch den Teiler 17 am Kühlmitteleinlass aufgeteilt werden. Bei einer kompletten Trennung der beiden Kühlkreisläufe 11,10 könnten diese gänzlich unterschiedliche Temperaturen aufweisen und dadurch eine individuelle Kühlung unterschiedlicher Bereiche des Abgaskühlers 1 bewirken. Beispielsweise könnte die Temperatur des Kühlmittels im ersten Kühlkreislauf 11 niedriger sein als im zweiten Kühlkreislauf 10, wodurch aufgrund der heißen Abgase eine gleichmäßige Temperierung des Abgaskühlers 1 erzielt werden könnte.

## Patentansprüche

1. Abgaskühler (1) mit einem Außengehäuse (2) und einem darin angeordneten Wärmetauschereinsatz (3), der in einem Innengehäuse (4) mit von Abgas quer angeströmte und zumindest teilweise von einem Kühlmittel eines ersten Kühlkreislaufs (11) durchströmte Rohre (5) aufweist,
**dadurch gekennzeichnet**,
dass zumindest Bereiche des Außengehäuses (2), insbesondere Seitenwände (8), von einem zweiten Kühlkreislauf (10) gekühlt sind, der getrennt vom ersten Kühlkreislauf (11) ist.

2. Abgaskühler nach Anspruch 1,
**dadurch gekennzeichnet**,
- dass das Innengehäuse (4) und das Außengehäuse (2) zusammen Kanäle (9) für den zweiten Kühlkreislauf (10) bilden oder
- dass das Außengehäuse (2) zumindest bereichsweise doppelwandig ausgebildet ist und Kanäle (9) für den zweiten Kühlkreislauf (10) bildet,

3. Abgaskühler nach Anspruch 1 und 2,
**dadurch gekennzeichnet**,
dass außen am Innengehäuse (4) und/oder innen am Außengehäuse (2) Stege/Rippen (13) angeordnet sind, die eine Kanalwand der Kanäle (9) bilden.

4. Abgaskühler nach einem der Ansprüche 1 bis 3,
**dadurch gekennzeichnet**,
dass der erste und der zweite Kühlkreislauf (11,10) parallel zueinander geschaltet sind.

5. Abgaskühler nach einem der Ansprüche 1 bis 4,
**dadurch gekennzeichnet**,
dass der Abgaskühler (1) einen Kühlmitteleinlass (15) und einen Kühlmittelauslass (16) aufweist, wobei im Bereich des Kühlmitteleinlasses (15) ein Teiler (17) angeordnet ist, der einen eintretenden Kühlmittelstrom (14) in den ersten und den zweiten Kühlkreislauf (11,10) aufteilt.

6. Abgaskühler nach einem der Ansprüche 1 bis 5,
**dadurch gekennzeichnet**,
dass die Rohre (5) gerade ausgebildet und über zwei Rohrböden (12) miteinander verbunden sind.

7. Abgaskühler nach einem der Ansprüche 1 bis 5,
**dadurch gekennzeichnet**,
dass die Rohre (5) als U-Rohre ausgebildet und über einen Rohrboden (12) miteinander verbunden sind.

8. Abgaskühler nach Anspruch 6 oder 7,
**dadurch gekennzeichnet**,
dass zumindest ein Rohrboden (12) einen Teil des Innengehäuses (4) bildet.

9. Brennkraftmaschine mit einem Abgaskühler (1) nach einem der Ansprüche 1 bis 8.

## Claims

1. An exhaust gas cooler (1) having an outer housing (2) and a heat exchanger insert (3) which is arranged therein and has pipes (5) around which exhaust gas flows transversely in an inner housing (4) and through at least a portion of which a coolant of a first coolant circuit (11) flows,
**characterized in**
that at least regions of the outer housing (2), in particular side walls (8) are cooled by a second cooling circuit (10) which is separated from the first cooling circuit (11).

2. The exhaust gas cooler according to claim 1, **characterized in**
- that the inner housing (4) and the outer housing (2) together form ducts (9) for the second cooling circuit (10) or
- that the outer housing (2) is formed to be double-walled at least in some regions and forms ducts (9) for the second cooling circuit (10).

3. The exhaust gas cooler according to claim 1 and 2,
**characterized in**
that webs/ribs (13) are arranged on the outside of the inner housing (4) and/or on the inside of the outer housing (2), said webs/ribs forming a duct wall of the ducts (9).

4. The exhaust gas cooler according to any one of claims 1 to 3,
**characterized in**
the first and the second cooling circuits (11, 10) are connected in parallel to one another.

5. The exhaust gas cooler according to any one of claims 1 to 4,
**characterized in**
that the exhaust gas cooler (1) has a coolant inlet (15) and a coolant outlet (16), wherein a divider (17) is arranged in the region of the coolant inlet (15), the divider dividing an inflowing coolant flow (14) into the first and the second coolant circuit (11, 10).

6. The exhaust gas cooler according to any one of claims 1 to 5,
**characterized in**
that the pipes (5) are formed to be straight and are connected to one another via two pipe sheets (12).

7. The exhaust gas cooler according to any one of the claims 1 to 5,
**characterized in**
that the pipes (5) are U-shaped and are connected to one another via a pipe sheet (12).

8. The exhaust gas cooler according to claim 6 or 7,
**characterized in**
that at least one pipe sheet (12) forms a part of the inner housing (4).

9. An internal combustion engine comprising an exhaust gas cooler (1) according to any one of claims 1 to 8.

## Revendications

1. Refroidisseur de gaz d'échappement (1) comportant un logement extérieur (2) et un insert d'échangeur thermique (3) disposé dans ce dernier, qui présente dans un logement intérieur (4) des tuyaux (5) traversés au moins partiellement par un fluide de refroidissement d'un premier circuit de refroidissement (11) et traversés transversalement par du gaz d'échappement,
caractérisé en ce
qu'au moins des zones du logement extérieur (2), notamment des parois latérales (8), sont refroidies par un deuxième circuit de refroidissement (10), qui est séparé du premier circuit de refroidissement (11).

2. Refroidisseur de gaz d'échappement selon la revendication 1,
caractérisé en ce
- que le logement intérieur (4) et le logement extérieur (2) forment conjointement des canaux (9) detsinés au deuxième circuit de refroidissement (10) ou
- que le logement extérieur (2) est conçu avec une double paroi au moins sur des portions et forme des canaux (9) destinés au deuxième circuit de refroidissement (10).

3. Refroidisseur de gaz d'échappement selon la revendication 1 ou 2,
caractérisé en ce
qu'à l'extérieur sur le logement intérieur (4) et/ou à l'intérieur sur le logement extérieur (2) des gradins/rainures (13) sont disposés, qui forment une paroi de canal des canaux (9).

4. Refroidisseur de gaz d'échappement selon une des revendications 1 à 3,
caractérisé en ce
que le premier et le deuxième circuit de refroidissement (11, 10) sont raccordés parallèlement les uns aux autres.

5. Refroidisseur de gaz d'échappement selon une des revendications 1 à 4,
caractérisé en ce
que le refroidisseur de gaz d'échappement (1) présente une admission de fluide de refroidissement (15) et un échappement de fluide de refroidissement (16), dans lequel au niveau de l'admission de gaz d'échappement (15) un séparateur (17) est disposé, qui divise un flux de fluide de refroidissement (14) entrant das le premier et le deuxième circuit de refroidissement (11, 10).

6. Refroidisseur de gaz d'échappement selon une des revendications 1 à 5,
caractérisé en ce
que les tuyaux (5) ont une configuration droite et sont reliés les uns aux autres par deux bases de tuyau (12).

7. Refroidisseur de gaz d'échappement selon une des revendications 1 à 5,
caractérisé en ce
que les tuyaux (5) sont conçus comme des tuyaux en U et sont reliés les uns aux autres par une base de tuyau (12).

8. Refroidisseur de gaz d'échappement selon la revendication 6 ou 7,
caractérisé en ce
qu'au moins une base de tuyau (12) forme une partie du logement intérieur (4).

9. Moteur à combustion interne comportant un refroidisseur de gaz d'échappement (1) selon une des revendications 1 à 8.
